# EUROPEAN PATENT APPLICATION

(11) **EP 2 796 244 A1**
(43) Date of publication of application: **29.10.2014**
(21) Application number: 14171041.8
(22) Date of filing: 07.07.2003
(51) Int. Cl.: B25B 1/24, B23Q 1/03

(54) **Locking support fixture**

(30) Priority: 08.07.2002 US 394536 P; 26.11.2002 WO PCT/US02/38203
(62) Divisional of application: 03763296.5
(71) Applicant: DTG International GmbH, 8005 Zürich (CH)
(72) Inventor: Moncavage, Charles, Nazareth, PA Pennsylvania 18064 (US)
(74) Representative: Boden, Keith McMurray

(57) **Abstract**

A system for setting, unlocking and/or resetting pins for use in manufacturing a workpiece, optionally a circuit board comprising: at least one pin locking apparatus having a housing which includes a plurality of pin bores, each being fluidly connected to a pin adjustment channel, and a plurality of pins each including a piston slidably disposed in a respective one of the pin bores, the pin bores being sized so that some amount of air passes by the pistons when an air pressure is delivered to the pin adjustment channels to extend the pins; and a sensing mechanism or manual input device for providing a signal to the pin locking apparatus to facilitate the setting, locking and/or resetting.

## Description

### FIELD OF THE INVENTION

The present invention relates generally to support fixtures and more specifically to compliant locking support fixtures.

### DESCRIPTION OF THE RELATED ART

Support fixtures for propping up workpieces have been widely used in the production of contoured parts from such varying applications as aircraft manufacturing, medical operations and circuit board manufacturing. Regardless of the workpiece, it is important to be able to hold the piece so that machining or further treatment operations can be performed. Generally, support fixtures for holding articles comprise a device containing vertically disposed adjustable pins or rods and means for securing the pins at a given vertical location. Exemplary support fixtures are described in U.S. Patent Nos. 4,200,272 to Godding, 4,684,113 to Douglas et al., 5,722,646 to Soderberg et al., and 5,984,293 to Abrahamson et al.

U.S. Patent No. 4,200,272 to Godding discloses a work holder comprising a flat horizontal table in which is mounted a two-dimensional array of vertically disposed spaced-apart rods which protrude upwards through the surface. The rods can be moved upwards individually, either manually or by springs or by fluid pressure means such as rams, and then clamped in position so that their tips form a cradle conforming to the shape of the workpiece, in which the workpiece rests.

U.S. Patent No. 4,684,113 to Douglas et al. discloses a holding fixture which has a contoured holding surface. The fixture includes a plurality of workpiece engaging rods which are individually adjustable in height. A holding force is generated through the rods to hold the workpiece to the fixture.

U.S. Patent No. 5,722,646 to Soderberg et al. discloses a tooling system having a support table with multiple openings adapted to removably accept a self-contained actuator. Each opening of the support table provides vacuum and air supply lines as well as a bus interface so that each position may be uniquely addressed and commanded separately from any other openings. The self-contained actuator has corresponding connectors for receiving the vacuum and air supply as well as for interfacing with the bus. An actuator may be placed at a particular location by insertion into the receptacle at the opening in the support table aperture. The actuator may be commanded to raise, lower, lock in position and supply vacuum separate from any other actuator.

U.S. Patent No. 5,984,293 to Abrahamson et al. discloses a fixture for holding printed circuit board assemblies during stencil printing, pick-and-place processing, and other PCB assembly processes. The fixture has a base and a plurality of support members movably attached to the base. The support members may project away from the base along support paths, and the support members are selectively positionable along the support paths when the support members engage a side of a printed circuit board assembly. The support members may be selectively positioned at heights corresponding to a topography of the side of the printed circuit board assembly to uniformly support the printed circuit board assembly.

Some problems with the prior art support fixtures include substantial set-up time, the requirement of expensive or sophisticated controls, and the inability to perform tasks on objects not accessible by manual means such as when in a hazardous or sterile environment. Another significant problem with the above described support fixture is the requirement for operator intervention to set or reset the pins to conform to each new workpiece. A support fixture is desired which is inexpensive and simple to employ and significantly reduces or eliminates set-up time and operator intervention.

### SUMMARY OF THE INVENTION

According to one embodiment, a pin locking apparatus for use in a support fixture includes a housing, at least one pin and at least one locking piston. The housing includes at least one locking bore and at least one pin bore. The at least one pin is slidably contained within the pin bore and is positioned by application of pressure in the pin bore. The at least one locking piston is slidably contained within the locking bore and is actuated by pressure in the locking bore to apply a locking force on the pin.

Another aspect is a method of positioning and locking a pin. The steps include applying a first fluid pressure to raise a pin to a desired position and applying a second fluid pressure to move a locking piston so that it engages and locks the pin at the desired location.

A further aspect is a method of operating a pin locking apparatus for manufacturing workpieces which comprises locking the pins of a pin locking apparatus to secure a first workpiece, unlocking the pins of the pin locking apparatus, and automatically relocking the pins of the pin locking apparatus to secure a second workpiece.

According to another embodiment, a system for setting and resetting pins for use in manufacturing a workpiece comprises a pin locking apparatus having a plurality of pins; and a host machine that provides a signal to the pin locking apparatus to facilitate the automatic setting and resetting of the pins of the pin locking apparatus.

According to another embodiment, a system for setting and resetting pins for use in manufacturing a workpiece comprises a pin locking apparatus having a plurality of pins, and a controller which is capable of automatically setting and resetting the pins of the pin locking apparatus.

### BRIEF DESCRIPTION OF THE DRAWINGS

FIG. 1 is a cross-sectional view of a pin locking apparatus according to one embodiment.
FIGS. 2A - 2E are schematic cross-sectional views of a pin locking apparatus depicting the steps locking and unlocking pins.
FIG. 3 is a partial cross-sectional view of a pin locking apparatus according to a second embodiment.
FIG. 4 is a partial cross-sectional view of a pin locking apparatus according to third embodiment.
FIG. 5 is cross-sectional view of a pin locking apparatus according to a fourth embodiment.
FIG. 6 is a view of two pin locking apparatuses in cross-section shown employed with a workpiece.
FIG. 7 is a flow chart diagram showing the process steps according to one exemplary embodiment.
FIG. 8 is a schematic of pin locking system according to an exemplary embodiment.

### DETAILED DESCRIPTION OF THE PREFERRED EMBODIMENT

This application hereby incorporates by reference the entire disclosure in U.S. provisional application serial number 60/394,536, filed July 8, 2002, and PCT Application Serial No. PCT/US02/38203, filed November 26, 2002.

This description of embodiments is intended to be read in connection with the accompanying drawing(s), which are to be considered part of the entire written description of this invention. In the description, relative terms such as "horizontal," "vertical," "up," "down," "top", "bottom", "front", "back", "forward", and "rearward", as well as derivatives thereof (e.g., "horizontally," "downwardly," "upwardly," etc.) should be construed to refer to the orientation as then described or as shown in the drawing figure under discussion. These relative terms are for convenience of description and normally are not intended to require a particular orientation.

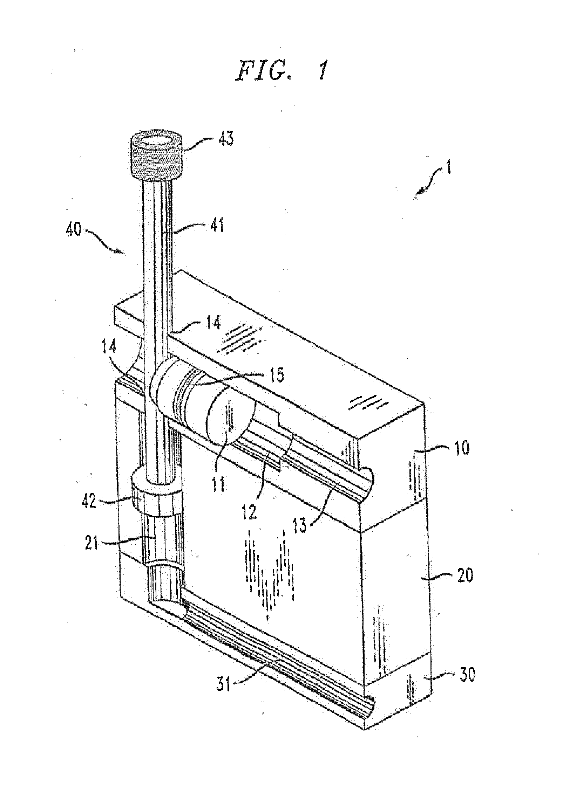

FIG. 1 shows a portion of an exemplary pin locking apparatus **1.** Pin locking apparatus **1** has a housing **100,** pin **40** and locking piston **11.** Housing **100** includes lock plate **10,** cylinder block **20,** and base plate **30**. Although shown as separate pieces assembled together, two or more of the preceding elements may be formed from a single piece of material. Lock plate **10** includes locking piston **11** a locking bore **12,** a pin locking channel **13,** and a pin opening **14.** Preferably, locking bore **12** is a horizontally bored hole, which movably retains the locking piston **11.** Preferably, locking piston **11** includes an o-ring **15.** The pin locking channel **13** is preferably also a horizontally bored hole, which is fluidly connected to the locking bore **12** and preferably has a smaller diameter than the locking bore. (As an alternative to having a separate reduced-diameter pin locking channel, the pin locking apparatus may have an extended constant-diameter locking bore **12** which can additionally perform the functions of the pin locking channel (i.e., fluidly connecting one side of the locking bore **12** to a source of pressurized fluid or vacuum). Where a locking bore **12** with only a single diameter is employed, preferably the pin locking apparatus has a means for restricting movement of the locking piston, such as a stop adjacent to the locking bore or projecting from a side wall of the locking bore.) The pin locking channel **13** is fluidly connected to a pneumatic device for delivery of fluid pressure (preferably air pressure) or vacuum to allow the locking piston **11** to engage or disengage a shaft **41.** The pin opening **14** is sized to guide a shaft **41** of the pin **40** as it is extended and retracted in the pin locking apparatus **1.** Pin opening **14** should be smaller in diameter than a piston **42** of the pin **40** to ensure that the pin **40** is retained within the pin locking apparatus 1 when pressure is applied to raise the pins **40.** Preferably, lock plate **10** is formed of aluminum, but may be made of any suitable material.

Cylinder block **20** includes a pin bore **21.** Pin bore **21** is a vertically bored hole for slidably engaging a piston **42** of the pin **40.** Pin bore **21** is fluidly connected to a pin adjustment channel **31** of base plate **30.** The diameter of the pin bore **21** corresponds to the diameter of piston **42** and is preferably sized so that some amount of air may pass by the piston **42.** Preferably, cylinder block **20** is made of aluminum, but may be made of any suitable material.

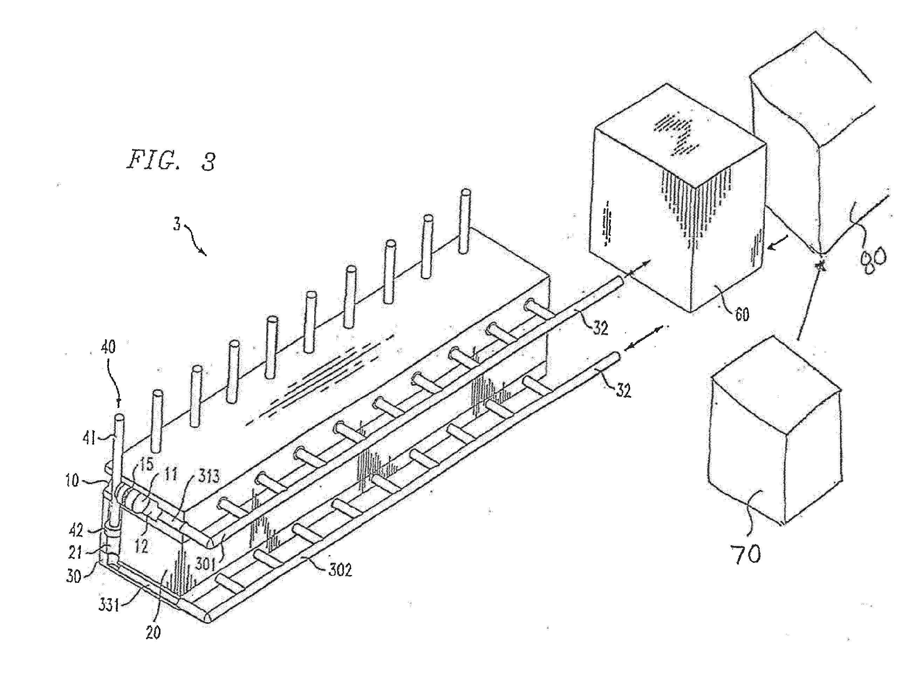

Base plate **30** includes a pin adjustment channel **31** for delivering air pressure and vacuum to the pin bore **21** of the cylinder block **20.** Preferably, pin adjustment channel **31** is a horizontally bored hole. The pin adjustment channel **31** is fluidly connected to a pneumatic device **60** (see FIG. 3) for delivery of air pressure or vacuum to extend or retract a shaft **41.** (Alternatively, or in addition to the use of air pressure to extend the shaft, the shaft may be extended by spring force.) Preferably, base plate **30** is made of aluminum, but may be made of any suitable material.

Pin **40** includes a shaft **41** and a piston **42.** Shaft **41** is slidably received in pin opening **14.** Preferably, shaft **41** includes a cap **43** made of a soft, resilient or deformable material, such as plastic or a complaint rubber material, for supporting an object, especially in applications where there is a chance of marking or otherwise damaging a workpiece. Pin **40** may consist of one piece with a different diameter for shaft **41** and piston **42,** or two separate pieces that are mated together. Pin **40** is preferably made from a hard material such as steel so that it is not damaged by the locking piston 50 being wedged against it. The material should also preferably be rigid so that it provides adequate support to a workpiece **50.**

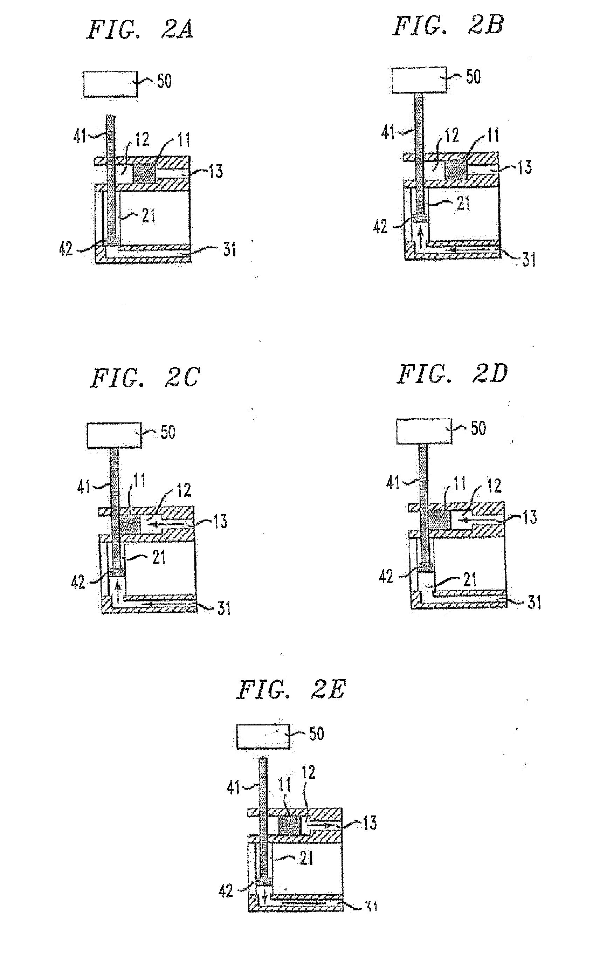

Referring to FIGS. 2A - 2E, the steps of positioning a shaft **41** to a desired location to support a workpiece and resetting the shaft **41** are illustrated. FIG. 2A shows the pin locking apparatus **1** in an unlocked (or reset) position. FIG. 2B illustrates the step of applying air pressure via the pin adjustment channel **31** to extend the pin **40** until the shaft **41** engages a workpiece **50** upon which a task is to be performed. (As stated above, the pin may also be extended by spring force.) Preferably air pressure is applied using a pneumatic device **60,** such as an air compressor. The pressure is preferably just enough to raise the pin **40** lightly until the shaft **41** contacts the surface of the workpiece to be supported.

FIG. 2C illustrates the step of applying air pressure via the pin locking channel **13** to move a locking piston **11** so that it engages and locks the shaft **41** of a pin **40** at the desired location. Air pressure continues to be applied via the pin adjustment channel **13** at least until the shaft **41** is locked by engagement by the locking piston **11.** Preferably air pressure applied to the move the locking piston **11** is also applied using a pneumatic device **60,** such as an air compressor. A single pneumatic device may supply air pressure to both air channels **13, 31** or separate pneumatic devices may be employed.

FIG. 2D illustrates the step of removing the air pressure applied to raise the pin **40.** The shaft **41** remains locked at the desired position by the frictional engagement of the locking piston **11.** Preferably, the air pressure applied via the pin locking channel **13** is maintained until the task being performed on the workpiece is completed. For supporting light or delicate objects, where less force is required, the frictional force can be regulated by adjusting the air pressure being applied to the locking piston **11.**

FIG. 2E illustrates the step of disengaging the locking piston **11** from the shaft **41** to reset the pin locking apparatus **1** for a different operation. To disengage the shaft **41,** vacuum is applied via the pin locking channel **13** to move the locking piston **11** in the locking bore **12** away from shaft **41.** Preferably vacuum is applied using a pneumatic device **60**, such as a vacuum pump. A single pneumatic device may supply both vacuum and air pressure to the air channels **13, 31,** or separate pneumatic devices may be employed. Preferably, while vacuum is applied to the pin locking channel 13, vacuum is also being applied to the pin adjustment channel **31** to aid in retracting the pin **40** from its heightened position. However, in certain circumstances, vacuum to the pin adjustment channel **31** may not be necessary, since gravity may act to retract the pin **40.** Once the locking piston **11** has been disengaged and the shaft **41** has been retracted, the vacuum may be removed from the air channels **13, 31.** The pin locking apparatus 1 is then reset and ready for use with a different workpiece.

As stated above, one or more pneumatic devices **60** may be employed to supply air pressure and vacuum to the pin locking apparatus **1.** In one preferred embodiment, the pneumatic device **60**, and therefore the setting and resetting (or locking and unlocking) of the pin locking apparatus 1, is controlled by a controller **80** (See FIG. 3), such as a computer, which automatically and sequentially controls the device. The controller **80** preferably contains the logic and switching devices which orchestrates the sequence of operations of any employed pin locking apparatus 1, 3, 4, 5,96. The pneumatic device **60** may also be controlled manually.

Referring to FIG. 3, a pin locking system **90** is shown, wherein the pin locking apparatus 3 (or the pneumatic device **60** that operates the pin locking apparatus) may be triggered to set or reset the pins by one or more host machine devices **70** that are involved in the assembly of the workpiece being manufactured. For example, where circuit boards are being manufactured, for example, the pin locking apparatus **3** or pneumatic device **60** may be triggered to set, unlock and/or reset the pins by devices such as a solder paste printer, a pick and place machine, a C & C milling machine, a board clamp device, and/or a drill press, or any other machine or assembly device performing an operation on the workpiece. One or more of these devices provide a signal to the pin locking apparatus **3,** either directly or through the pneumatic device **60** or controller **80,** for example, to trigger the setting, unlocking and/or resetting of the pins. The employment of the host machine device **70** may advantageously allow the system **90** to automatically reset for each workpiece without any need for operator intervention.

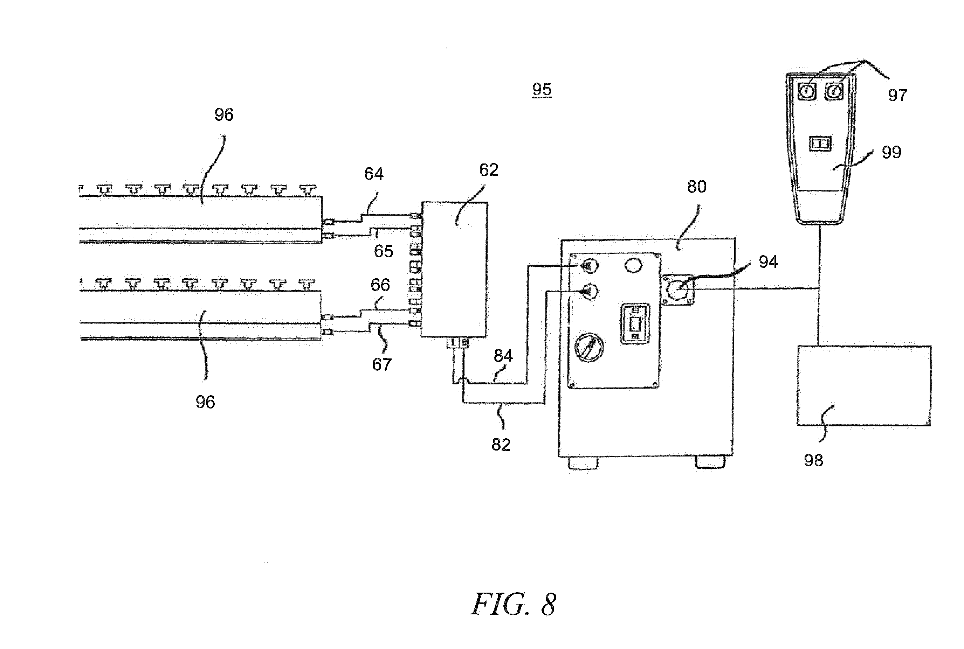

Referring to FIG. 8, a schematic of an embodiment of a pin locking system **95** is shown, including at least one pin locking apparatus **96,** a distribution manifold **62,** a controller **80,** and a sensing mechanism **98.** The pin locking system also preferably includes a pneumatic device (not shown) which is connected to the controller **80,** or, alternatively, is integral with the controller **80.** Preferably, the controller **80** includes two lines **82, 84** for controlling the air pressure and vacuum to the pin locking apparatuses **96,** which are preferably connected to the distribution manifold **62** (or alternatively may be connected directly to the pin locking apparatuses **96).** The distribution manifold **62** can divide the air pressure and vacuum from the lines **82, 84** of the controller **80** into a plurality of lines **64, 65, 66, 67** to support a plurality of pin locking apparatuses **96.**

Alternatively, or in addition to, the sensing mechanism **98,** the pin locking system **95** may include a manual input device **99.** The sensing mechanism **98,** which triggers the pin locking apparatus **96** to set, unlock, and/or reset the pins, may be, for example, an optical sensing device or a pressure sensor, but may include a variety of other sensing devices. The controller **80** preferably includes a plug **94** or other input means into which the sensing mechanism **98** is connected. The sensing mechanism **98** (such as an optical sensor or pressure sensor) may operate by sensing the presence of a workpiece at the location of the pin locking apparatus **96,** thereby signaling the controller **80** to automatically reset (lift and lock) the pins. The sensing mechanism could likewise sense the absence of the workpiece, such as when it has left the pin locking apparatus **96,** and thereby signal the controller **80** to unlock and lower the pins to prepare for a subsequent workpiece. The sensing mechanism may advantageously allow the system **95** to automatically reset for each workpiece without any need for operator intervention.

The manual input device **99,** which also operates to trigger the pin locking apparatus, may be, for example, a mechanism which has buttons **97** (e.g., "up" and "down" buttons) or switches for allowing an operator to set (lift) or unlock (lower) the pins. The controller **80** preferably includes a plug **94** or other input means into which the manual input device **99** is connected. This use of a manual input device **99** may advantageously allow an operator to choose when to reset the pin locking apparatus **96** as opposed to having it automatically reset to each workpiece.

FIGS. 3-5 show other embodiments of a pin locking apparatus, each including a plurality of pins **40,** a plurality of locking pistons **11,** and a housing **300, 400, 500** including a plurality of locking bores **12** that movably contain respective locking pistons **11,** a plurality of pin bores **21** each capable of movably containing a respective pin **40**, a pin locking channel **313, 413, 513** fluidly connected to each locking bore **12,** and a pin adjustment channel **331, 431, 531** fluidly connected to each pin bore **21.** Preferably the locking pistons **11,** locking bores **12** and pin locking channel **313, 413, 513** are contained within a lock plate **10,** the pin bores **12** are contained within a cylinder block **20** and the pin adjustment channel **331, 431, 531** is contained within a bottom plate **30.** Further, these pin locking apparatuses **3, 4, 5** preferably also include an o-ring **15** on each locking piston **50,** and air connection means, such as connection ports **32,** for connecting the pin locking channel and pin adjustment channel to a pneumatic device **60.** Preferably the pins **40** and corresponding pin bores **21** are arranged in one or more rows. The number of rows and pins, as well as the spacing between pins, can be varied depending on the size and make-up of the workpiece. The pin locking apparatuses **3,4,5** may further include one or more pneumatic devices **60** for supplying air pressure or vacuum to such apparatuses. The method of setting and resetting (or locking and unlocking) the pins of these pin locking apparatuses is essentially the same as that described above with respect to the embodiment of FIG. 1.

Referring to FIG. 3, a pin locking apparatus **3** is shown wherein the locking plate **10** of housing 300 has a plurality of pin locking channels **313** and the base plate **30** has a plurality of pin adjustment channels **331**. Pin locking apparatus **3** includes a first and second external air conduit **301, 302.** The first external air conduit **301** is fluidly connected to each pin locking channel **313.** The second external air conduit **302** is fluidly connected to each pin adjustment channel **331.** The first and second external air conduits **301, 302** preferably include an air connection means, such as connection ports **32,** for connecting the external air conduits to a pneumatic device **60.**

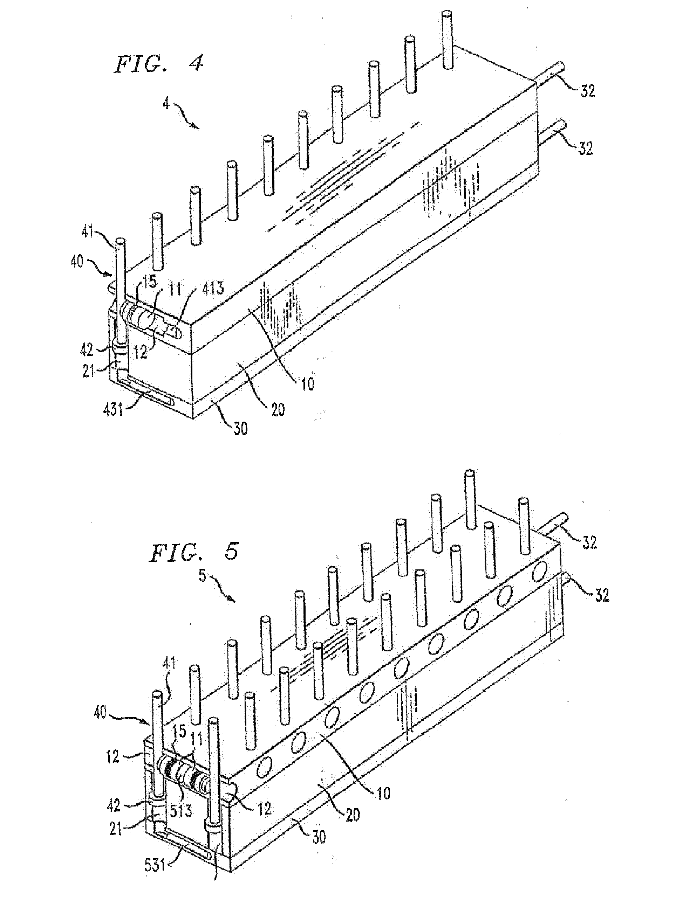

Referring to FIG. 4, another embodiment of the invention is shown that is similar to the embodiment of FIG. 3, except that rather than having a portion of the air flow means of the pin locking apparatus **4** plumbed externally, the means of air flow is essentially completely internal. The single pin locking channel **413** is enclosed within the lock plate **10** of housing **400** and branches to fluidly connect to each locking bore **12.** Likewise, the single pin adjustment channel **431** is enclosed within the base plate **30** and branches to fluidly connect to each pin bore **21.** Preferably, the pin locking apparatus **4** includes an air connection means, such as connection ports **32,** for fluidly connecting the air channels **413, 431** to a pneumatic device **60**.

Referring to FIG. 5, another embodiment of the invention is shown wherein the pin locking apparatus **5** includes at least two rows of pins **40** with opposing and aligned locking pistons **11.** As can be understood from FIG. 5, a single pin locking channel **513** in housing **500** is fluidly connected to the locking bores **12** that movably contain the locking pistons **11,** which in turn engage the respective shafts **41** in the two aligned rows of pins **40.** Likewise, a single pin adjustment channel **531** is fluidly connected to each pin bore **21** which movably retain the pistons **42** in the two aligned rows of pins **40.** Preferably, the pin locking apparatus **5** includes an air connection means, such as connection ports **32,** for fluidly connecting the air channels **513, 531** to a pneumatic device **60.**

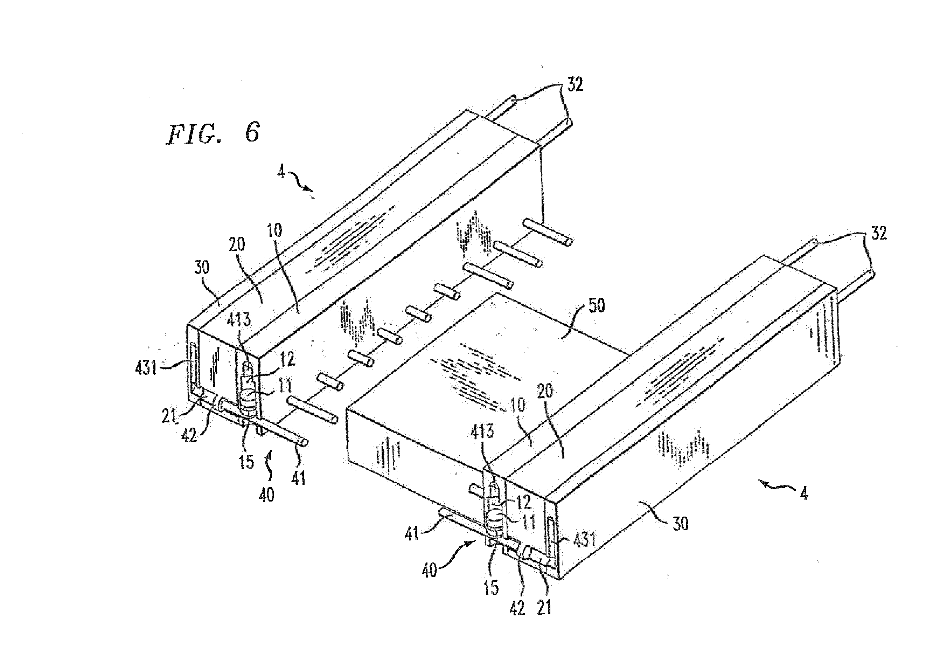

FIG. 6 illustrates two pin locking apparatuses **4** employed in conjunction with each other to grip or lift a workpiece **50**. Although illustrated using the embodiment shown in FIG. 4, the embodiments of FIGS. 3 or 5 may be used, as well as other embodiments using two or more rows of pins.

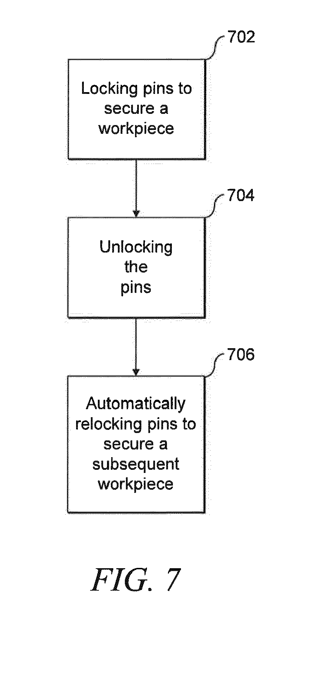

Referring to FIG. 7, a method of operating a pin locking apparatus for manufacturing workpieces according to one embodiment includes locking (or setting) **702** the pins of a pin locking apparatus to secure a first workpiece, unlocking **704** the pins of the pin locking apparatus, and automatically relocking (or resetting) **706** the pins of the pin locking apparatus to secure a second or subsequent workpiece. Preferably, the initial locking or setting of the pins and the unlocking of the pins are also performed automatically. Preferably these steps occur without any operator intervention. Also preferably, the step of relocking occurs no more than three seconds after the pins are unlocked. However, the step of relocking may occur more than three seconds after the pins are unlocked, but preferably occurs within an amount of time that does not interfere with the normal operation of any machine that is being employed to assemble the workpiece. This automatic relocking ability advantageously allows the pin locking apparatus to quickly reconform to a subsequent workpiece or any number of subsequent workpieces having a structural difference from the previous workpiece that was secured by the pin locking apparatus. This is especially beneficial in the manufacture of circuit boards where slight deviations are often present between individual circuit boards and readjustment of the support fixture is beneficial for maintaining circuit boards of good quality. Current support fixtures either fail to compensate for deviations in subsequent workpieces or require operator intervention between subsequent workpieces to reset the support fixture to conform to each subsequent workpiece.

Although the invention has been described in terms of exemplary embodiments, it is not limited thereto. Rather, the appended claims should be construed broadly, to include other variants and embodiments of the invention which may be made by those skilled in the art without departing from the scope and range of equivalents of the invention. For example, although shown in the figures as including one or two rows of pins per pin locking apparatus, the pin locking apparatus may contain any number of rows, which may contain pins that are aligned or unaligned, and have various spacing or distances between the pins.

Embodiments of the invention include:
1. A pin locking apparatus comprising: a housing having: at least one locking bore, at least one pin bore, at least one pin slidably contained within the pin bore and positioned by application of pressure in the pin bore; and at least one locking piston slidably contained within the locking bore and actuated by pressure in the locking bore to apply a locking force on the pin.
2. The apparatus of statement 1, wherein the housing further comprises a pin locking channel fluidly connected to apply pressure or vacuum to the locking bore, and a pin adjustment channel fluidly connected to apply pressure or vacuum to the pin bore.
3. The apparatus of statement 2, wherein: the locking piston, locking bore and pin locking channel are contained in a locking plate, said locking plate includes a pin opening, and the pin opening is aligned with the pin bore.
4. The apparatus of statement 2, wherein the pin bore is contained within a cylinder block.
5. The apparatus of statement 2, wherein the pin adjustment channel is contained within a bottom plate.
6. The apparatus of statement 3, wherein the pin bore is contained within a cylinder block, and wherein the pin adjustment channel is contained within a bottom plate.
7. The apparatus of statement 6, wherein the locking plate, cylinder block and bottom plate are separate pieces that are assembled together.
8. The apparatus of statement 6, wherein the locking plate, cylinder block and bottom plate are formed from a single piece of material.
9. The apparatus of statement 2, wherein the locking piston includes an o-ring seal.
10. The apparatus of statement 2, wherein the pin includes a piston and a shaft, the piston having a greater diameter than the shaft.
11. The apparatus of statement 2, wherein the pin has a shaft and a cap made of a material softer than the shaft.
12. The apparatus of statement 2, wherein the locking piston has a locking position for locking the pin at a desired height and an unlocking position, and wherein the locking piston engages the pin in the locking position and is remote from the pin in the unlocking position.
13. The pin locking apparatus of statement 1, wherein: the housing has a plurality of locking bores that includes the at least one locking bore, the housing has a plurality of pin bores that includes the at least one pin bore, the apparatus has a plurality of pins slidably contained within respective ones of the plurality of pin bores, each pin positioned by application of pressure in the corresponding pin bore, and the apparatus has a plurality of locking pistons, each slidably contained within a respective locking bore, each locking piston actuated by pressure in the corresponding locking bore to apply a locking force on the corresponding pin in that locking bore.
14. The apparatus of statement 13, wherein the housing further comprises a pin locking channel fluidly connected to apply pressure or vacuum to the locking bores, and a pin adjustment channel fluidly connected to apply pressure or vacuum to the pin bores.
15. The apparatus of statement 14 further comprising a first external air conduit which is fluidly connected to each pin locking channel and a second external air conduit which is fluidly connected to each pin adjustment channel.
16. The apparatus of statement 14, wherein the pin locking channel and the pin adjustment channel is enclosed within the pin locking apparatus.
17. The apparatus of statement 16, wherein the pin locking channel is enclosed within a locking plate of the pin locking apparatus, and wherein the pin adjustment channel is enclosed with a base plate of the pin locking apparatus.
18. The apparatus of statement 14 further comprising air connection means for connecting the pin locking channel to a pneumatic device.
19. The apparatus of statement 16 wherein the pin locking apparatus includes at least two rows of pins with opposing locking pistons.
20. The apparatus of statement 14, further comprising a pneumatic device, wherein the pneumatic device is fluidly connected to one or both of the pin locking channel and the pin adjustment channel.
21. The apparatus of statement 20, wherein the pneumatic device provides one or both of pressure and vacuum to one or both of the pin locking channel and the pin adjustment channel for locking and unlocking the piston units.
22. The apparatus of statement 14 comprising first and second pneumatic devices, the first pneumatic device fluidly connected to the pin locking channel and the second pneumatic device fluidly connected to the pin adjustment channel.
23. The apparatus of statement 21, wherein the pneumatic device is controlled by a programmable controller.
24. The apparatus of statement 21, wherein the pneumatic device is controlled manually.
25. A method of positioning and locking a pin comprising the steps of: applying a first fluid pressure to raise a pin to a desired position, and applying a second fluid pressure to move a locking piston that engages and locks the pin at the desired location.
26. The method of statement 25, further comprising removing the fluid pressure applied to raise the pin.
27. The method of statement 26, further comprising applying vacuum to disengage the locking piston from the pin.
28. The method of statement 27, further comprising applying vacuum to retract the pin.
29. The method of statement 28, wherein the step of applying pressure to raise and vacuum to retract the pin is performed by applying fluid pressure or vacuum through a pin adjustment channel, and wherein the step of applying pressure to move and vacuum to disengage the locking piston is performed by applying fluid pressure or vacuum through a pin locking channel.
30. The method of statement 29, wherein each step is performed by a pneumatic device.
31. The method of statement 30, wherein the pneumatic device is automatically controlled via a programmable controller.
32. The method of statement 30, wherein the pneumatic device is controlled manually.
33. A method of operating a pin locking apparatus for manufacturing workpieces comprising: (a) locking the pins of a pin locking apparatus to secure a first workpiece; (b) unlocking the pins of the pin locking apparatus; and (c) automatically relocking the pins of the pin locking apparatus to secure a second workpiece.
34. The method of statement 33, wherein the step of automatically relocking the pins is performed without operator intervention.
35. The method of statement 33, wherein the step of automatically relocking occurs no more than three seconds after the pins are unlocked.
36. The method of statement 33, wherein the pins are locked in a different configuration in relocking step (c) than the pins are configured in locking step (a).
37. The method of statement 33, wherein the workpiece is a circuit board.
38. The method of statement 33, wherein the locking and relocking of the pin locking apparatus is triggered by a host machine device that is involved in the manufacture of the workpiece.
39. The method of statement 38, wherein the work piece is a circuit board and the host machine is a solder paste printer, a pick and place machine, a milling machine, a board clamp device, or a drill press.
40. The method of statement 39, wherein the pins of the pin locking apparatus conformably support the first and second workpieces.
41. The method of statement 33, wherein the locking, unlocking, and relocking of the pin locking apparatus is triggered by a sensing mechanism.
42. The method of statement 33, wherein steps (a) and (b) are performed automatically.
43. A system for setting, unlocking and/or resetting pins for use in manufacturing a workpiece comprising: at least one pin locking apparatus having a plurality of pins ; and a host machine that provides a signal to the pin locking apparatus to facilitate the automatic setting and resetting of the pins of the pin locking apparatus.
44. The system of statement 43, wherein the signal from the host machine is provided to the pin locking apparatus via a controller.
45. The system of statement 43, wherein the signal from the host machine is provided to the pin locking apparatus via a programmable controller.
46. The system of statement 43, wherein the workpiece is a circuit board and the host machine is a solder paste printer, a pick and place machine, a milling machine, a board clamp device, or a drill press.
47. The system of statement 43, further including a workpiece supported by the pins of the pin locking apparatus, and wherein the pins of the pin locking apparatus conformably support the workpiece.
48. A system for setting, unlocking, and/or resetting pins for use in manufacturing a workpiece comprising: at least one pin locking apparatus having a plurality of pins; and a controller which is capable of automatically setting and resetting the pins of the pin locking apparatus.
49. The system of statement 48, further including a sensing mechanism, wherein the sensing mechanism triggers the controller to set, unlock and/or reset the pins.
50. The system of statement 49, wherein the sensing mechanism is one or more of an optical sensor or a pressure sensor.
51. The system of statement 48, further including a manual input device, wherein the manual input device triggers the controller to set, unlock and/or reset the pins.
52. The system of statement 48, further including a pneumatic device which is connected to the controller.
53. The system of statement 52, further including a distribution manifold which is connected to the controller and the at least one pin locking apparatus.

## Claims

1. A system for setting, unlocking and/or resetting pins for use in manufacturing a workpiece, optionally a circuit board comprising: at least one pin locking apparatus having a housing which includes a plurality of pin bores, each being fluidly connected to a pin adjustment channel, and a plurality of pins each including a piston slidably disposed in a respective one of the pin bores, the pin bores being sized so that some amount of air passes by the pistons when an air pressure is delivered to the pin adjustment channels to extend the pins; and a sensing mechanism or manual input device for providing a signal to the pin locking apparatus to facilitate the setting, locking and/or resetting, optionally the automatic setting, locking and/or resetting, of the pins of the pin locking apparatus, optionally the signal is provided to the pin locking apparatus via a controller, optionally the controller is a programmable controller.

2. The system of claim 1, wherein the workpiece is a circuit board and the host machine is a solder paste printer, a pick and place machine, a milling machine, a board clamp device or a drill press.

3. A system for setting, unlocking and/or resetting pins for use in manufacturing a workpiece, optionally a circuit board; comprising: at least one pin locking apparatus having a housing which includes a plurality of pins bores, each being fluidly connected to a pin adjustment channel, and a plurality of pins each including a piston slidably disposed in a respective one of the pin bores, the pin bores being sized so that some amount of air passes by the pistons when an air pressure is delivered to the pin adjustment channels to extend the pins; and a controller which is capable of setting, locking and/or resetting the pins of the pin locking apparatus.

4. The system of claim 3, further comprising:
a sensing mechanism, optionally one or more of an optical sensor or a pressure sensor, or a manual input device.

5. The system of claim 1 or 4, wherein the sensing mechanism and/or the manual input device triggers the controller to set, lock and/or reset the pins.

6. The system of claim 1 or 3, wherein the pins of the pin locking apparatus conformably support the workpiece.

7. The system of claim 1 or 5, wherein the air pressure is just enough to raise the pins until shafts of the pins contact a surface of the workpiece to be supported.

8. The system of claim 1 or 3, wherein the pins are retracted by gravity alone, when the air pressure is removed.

9. The system of claim 1 or 3, wherein the pin locking apparatus further comprises a plurality of locking pistons actuated by pressure to apply a locking force on the pins.

10. The system of claim 1 or 3, wherein the pin bores are contained within a cylinder block.

11. The apparatus of claim 1 or 3, wherein the pins each include a piston and a shaft, the piston having a greater diameter than the shaft, optionally the pins each have a cap made of a material softer than the shaft.

12. A method of positioning and locking pins of the system of claim 1 or 3, comprising the steps of:
applying a first air pressure to raise the pins to desired positions; and
applying a second air pressure to move the locking pistons to engage and lock the pins at the desired positions.

13. The method of claim 12, further comprising the step of: removing the air pressure applied to raise the pins, whereby the pins are retracted by gravity alone.

14. A method of operating the system of claim 1 or 3, for manufacturing workpieces, comprising the steps of:
(a) locking the pins of the pin locking apparatus to secure a first workpiece;
(b) unlocking the pins of the pin locking apparatus; and
(c) relocking the pins of the pin locking apparatus to secure a second workpiece, optionally the step of relocking the pins is performed automatically without operator intervention, optionally the step of relocking occurs no more than three seconds after the pins are unlocked, optionally the pins are locked in a different configuration in relocking step (c) than the pins are configured in locking step (a).

15. The method of claim 14, wherein the locking and relocking of the pin locking apparatus is triggered by a host machine device that is involved in the manufacture of the workpiece, optionally the workpiece is a circuit board and the host machine is a solder paste printer, a pick and place machine, a milling machine, a board clamp device or a drill press.
